# FASCICULE DE BREVET EUROPEEN

(11) **EP 2 362 837 B1**
(45) Date de publication et mention de la délivrance du brevet: **05.09.2012**
(21) Numéro de dépôt: 09737099.3
(22) Date de dépôt: 21.07.2009
(51) Int. Cl.: B60H 3/00

(54) **SYSTEME DE TRAITEMENT D'AIR POUR VEHICULE AUTOMOBILE**
KRAFTFAHRZEUGLUFTBEHANDLUNGSSYSTEM
MOTOR VEHICLE AIR TREATMENT SYSTEM

(30) Priorité: 21.07.2008 FR 0854947
(43) Date de publication de la demande: 07.09.2011
(73) Titulaire: Renault s.a.s., 92100 Boulogne-Billancourt (FR)
(72) Inventeur: MAKAROV, Maxime, F-78220 Viroflay (FR); BOUAMRA, Kahina, F-91300 Massy (FR); AMEZIANI, Menouar, F-78280 Guyancourt (FR)
(86) Numéro de dépôt international: PCT/FR2009/051458
(87) Numéro de publication internationale: WO 2010/010289

(56) Documents cités:
- EP-A- 1 772 680
- DE-A1- 19 919 623
- DE-B3- 10 317 514

## Description

La présente invention concerne le domaine du traitement de l'air de l'habitacle d'un véhicule automobile. L'invention concerne en particulier les systèmes aptes à refroidir et à purifier l'air de l'habitacle.

De tels systèmes peuvent comprendre des dispositifs de refroidissement d'air comprennent un échangeur thermique. Le flux d'air à refroidir s'écoule le long de la paroi extérieure de l'échangeur thermique. Un fluide, plus froid que l'air à refroidir, circule à l'intérieur de l'échangeur.

On connaît en particulier des dispositifs de climatisation qui sont constitués d'un condenseur dans lequel un fluide de réfrigération à l'état gazeux se condense au contact de l'air extérieur, et un évaporateur dans lequel le fluide de réfrigération à l'état liquide s'évapore au contact de l'air à refroidir. Entre le condenseur et l'évaporateur, sont placés un compresseur et un détendeur qui permettent de changer la température du fluide de réfrigération en changeant sa pression.

D'une manière générale, lorsque la température de l'air diminue au contact de l'échangeur thermique, une partie de la vapeur d'eau en suspension dans l'air se condense sous forme de gouttelettes. Ces gouttelettes se forment principalement sur la paroi de l'échangeur thermique, là où la température est la plus faible, et crée un état d'humidité quasi constant à proximité de l'échangeur thermique.

La formation de telles gouttelettes entraîne plusieurs inconvénients parmi lesquels l'apparition et la prolifération de microorganismes tels que des bactéries, des levures ou des champignons, qui trouvent un milieu humide favorable à leur développement. Ces microorganismes sont responsables de la génération de mauvaises odeurs pouvant incommoder les utilisateurs des systèmes de refroidissement d'air, en particulier dans un espace restreint comme l'habitacle d'un véhicule automobile.

Par ailleurs, les systèmes de refroidissement d'air utilisent également un filtre à air pour stopper les poussières et, en particulier, des éléments allergènes tels que le pollen. De tels filtres utilisent du charbon actif.

Le brevet US 6 991 532 décrit un appareil de décontamination pour système d'air conditionné pour véhicule automobile. Un générateur d'ozone est monté entre le ventilateur et l'évaporateur. Un inconvénient de ce dispositif est qu'il est difficilement compatible avec l'implantation d'un filtre. En effet, si l'ozone généré traversait le filtre avant de rejoindre l'évaporateur, le charbon actif du filtre détruirait la majorité des particules d'ozone.

La demande de brevet EP 1 790 360 décrit une méthode de stérilisation de l'air d'une pièce. L'air est filtré et un générateur d'ions est disposé en aval du filtre. Une telle méthode ne convient pas pour traiter l'air d'un véhicule automobile. L'espace entre le filtre à air et l'échangeur thermique est très réduit en raison des contraintes d'implantation du système de traitement d'air dans le véhicule.

Dans le but de faciliter l'implantation du système dans le véhicule le document EP1772 680, qui est considéré comme l'art antérieur le plus proche, divulgue un système de traitement d'air pour véhicule automobile, comprenant un conduit principal d'air relié à l'habitacle du véhicule, un dispositif de refroidissement d'air muni d'un échangeur thermique logé dans le conduit principal, un dispositif de propulsion d'air apte à propulser de l'air le long de l'échangeur thermique et du conduit principal vers l'habitacle, le système comprenant un dispositif de stérilisation apte à générer un gaz stérilisant dans l'air longeant l'échangeur thermique, implanté dans

une canalisation auxiliaire dont une extrémité intérieure présente une ouverture débouchant à l'intérieur du conduit principal au voisinage de l'échangeur thermique.

L'invention propose un système de traitement d'air pour véhicule automobile, apte à refroidir de l'air de l'habitacle et à détruire les microorganismes susceptibles de se former dans le système, suivant les caractéristiques de la revendication indépendante 1.

Le dispositif de stérilisation est implanté dans une portion extérieure de la canalisation auxiliaire située à l'extérieur du conduit principal.

Les microorganismes sont susceptibles de proliférer dans le voisinage de l'échangeur thermique. La canalisation auxiliaire va permettre d'amener le gaz stérilisant à un endroit utile pour agir sur ces microorganismes. La canalisation auxiliaire présente, à l'intérieur du conduit principal, un encombrement bien moindre que le dispositif de stérilisation. Autrement dit, le dispositif de stérilisation est déporté dans une zone extérieure au conduit principal. Cela facilite l'implantation dans le véhicule du système de traitement d'air.

Avantageusement, l'échangeur thermique est du type évaporateur de fluide de réfrigération. Ce type d'échangeur thermique présente un pouvoir de refroidissement élevé pour un encombrement réduit.

Selon une variante, le dispositif de stérilisation comprend une première et une deuxième électrode, séparées par un matériau diélectrique et alimentées par une source électrique haute tension.

La première électrode peut être située à l'intérieur de la canalisation auxiliaire. Un champ électrique intense est généré entre les deux électrodes et en particulier dans l'air de la canalisation auxiliaire au voisinage de la première électrode. Le champ électrique ionise l'air et en particulier les molécules d'oxygène, favorisant la production d'ions oxydants et en particulier d'ozone.

Selon une variante, le dispositif de stérilisation comprend une électrode à plasma à effet couronne. Ce type d'électrode concentre le champ électrique. Le plasma généré favorise la formation d'ions oxydants et notamment d'ozone.

Avantageusement, le dispositif de stérilisation est un générateur d'ozone. L'ozone présente l'avantage d'être plus lourd que l'air. L'ozone se déplace naturellement vers le bas d'un volume d'air.

Avantageusement, l'extrémité intérieure de la canalisation auxiliaire est située dans une zone basse de l'échangeur thermique, relativement la plus basse du voisinage de l'échangeur lorsque le système est implanté dans le véhicule. La zone basse de l'échangeur est celle où l'humidité générée par le refroidisseur stagne le plus naturellement et où se forment les microorganismes à stériliser. La localisation de l'ouverture de la canalisation auxiliaire dans la zone basse améliore l'efficacité de l'action sur les microorganismes.

Avantageusement, le dispositif de stérilisation est situé en un point de la canalisation auxiliaire destiné à être situé au dessus du conduit principal lorsque le système est implanté dans le véhicule. Cela présente l'avantage que l'ozone se déplace naturellement du dispositif de stérilisation jusqu'à l'extrémité intérieure de la canalisation auxiliaire.

Selon un mode de réalisation, la canalisation auxiliaire présente volet d'isolement auxiliaire situé au-delà du dispositif de stérilisation par rapport à l'extrémité intérieure. Cela permet d'utiliser la canalisation auxiliaire à plusieurs fins. Lorsque le volet d'isolement auxiliaire est fermé, le dispositif de stérilisation peut être actionné et le gaz stérilisant peut être acheminé vers l'échangeur thermique. Lorsque le volet d'isolement auxiliaire est ouvert, le dispositif de stérilisation est éteint et la canalisation auxiliaire peut servir à alimenter en air refroidi une zone réfrigérée spécialement présentant une température plus basse que celle de l'habitacle.

Avantageusement, le système comprend un pulseur auxiliaire apte à déplacer de l'air depuis le dispositif de stérilisation jusqu'à l'extrémité intérieure de la canalisation auxiliaire. Le pulseur auxiliaire permet d'accélérer le déplacement des gaz stérilisants vers l'échangeur thermique. Cela permet de réduire le temps de traitement nécessaire.

Suivant l'invention, le système comprend un volet d'isolement principal situé dans le conduit principal, en aval de l'échangeur thermique et de l'extrémité interne de la canalisation auxiliaire. Le volet d'isolement principal permet d'éviter que les gaz stérilisants ne s'échappent vers l'habitacle.

Selon un autre aspect, l'invention porte sur un véhicule comprenant un système de traitement d'air et une zone réfrigérée parallèlement à l'habitacle. La canalisation auxiliaire est reliée à ladite zone réfrigérée par une extrémité extérieure de la canalisation auxiliaire, opposée à l'extrémité intérieure.

D'autres caractéristiques et avantages de l'invention apparaîtront à la lecture de la description détaillée de quelques modes de réalisation pris à titre d'exemples non limitatifs et illustrés par le dessin annexé, selon lequel :
- la figure 1 est un schéma en coupe d'un mode de réalisation du système de traitement selon l'invention ;
- la figure 2 est un schéma en coupe d'un mode de réalisation du dispositif de stérilisation ; et
- la figure 3 est un schéma en coupe du dispositif de stérilisation.

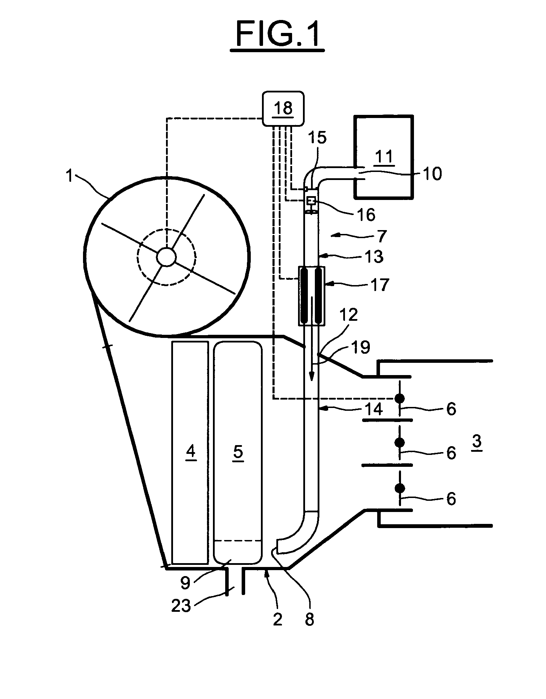

Comme illustré sur la figure 1, le système comprend un dispositif de propulsion d'air 1, un conduit principal 2 guidant l'air propulsé vers l'habitacle du véhicule 3. Le conduit principal comprend, dans le sens d'écoulement d'air du dispositif de propulsion 1 vers l'habitacle 3, un filtre à air 4, un évaporateur 5 et un dispositif de volet principal 6.

Le système comprend également une canalisation auxiliaire 7 présentant une extrémité intérieure 8, débouchant à l'intérieur du conduit principal 2 dans une zone basse 9 de l'évaporateur 5.

La canalisation auxiliaire 7 comprend également une extrémité extérieure 10 débouchant dans une zone réfrigérée 11.

Le conduit principal 2 présente un orifice auxiliaire 12 par où la canalisation auxiliaire 7 pénètre à l'intérieur du conduit principal 2. La canalisation auxiliaire 7 présente une portion extérieure 13 s'étendant depuis l'orifice auxiliaire 12 jusqu'à l'extrémité extérieure 10, et une portion intérieure 14 s'étendant depuis l'orifice d'introduction 12 jusqu'à l'extrémité intérieure 8.

La portion extérieure 13 de la canalisation auxiliaire 7 comprend un volet auxiliaire 15, un pulseur auxiliaire 16 et un dispositif de stérilisation 17. Le volet auxiliaire 15 est situé au-delà du dispositif de stérilisation 17 par rapport à l'extrémité intérieure 8. Ainsi, lorsque le volet auxiliaire 15 est fermé, le dispositif de stérilisation 17 est isolé de la zone réfrigérée 11. Le pulseur auxiliaire 16 est situé entre le volet auxiliaire 15 et le dispositif de stérilisation 17. Lorsque le pulseur auxiliaire 16 est en fonctionnement, le volet auxiliaire 15 fonctionne en clapet antiretour, permettant à de l'air de la zone réfrigérée 11 de pénétrer dans le dispositif de stérilisation 17 mais empêchant le mouvement inverse.

Une unité de commande 18 est reliée au dispositif de propulsion d'air 1, au volet auxiliaire 15, au pulseur auxiliaire 16, au dispositif de stérilisation 17 et au volet principal 6. L'unité de commande 18 synchronise le dispositif de propulsion d'air et l'ouverture du volet principal 6 pendant que le dispositif de stérilisation 17 n'est pas actionné. Inversement, l'unité de commande 18 actionne le dispositif de stérilisation 17 pendant que le volet auxiliaire 15 est fermé, le pulseur auxiliaire 16 est actionné, que le dispositif de volet principal 6 est fermé, et que le dispositif de propulsion d'air 1 n'est pas actionné.

Des gaz stérilisants 19 comprenant par exemple de l'ozone, ne pénètrent dans le conduit principal 2 que lorsque le dispositif de volet principal 6 et le volet auxiliaire 15 sont fermés. Il n'y a ainsi pas de risque que les gaz stérilisants 19 pénètrent dans l'habitacle 3 du véhicule ni dans la zone réfrigérée 11.

Le conduit principal 2 est muni d'un purgeur 23 permettant l'évacuation de l'eau produite par la condensation de l'air longeant l'évaporateur 5.

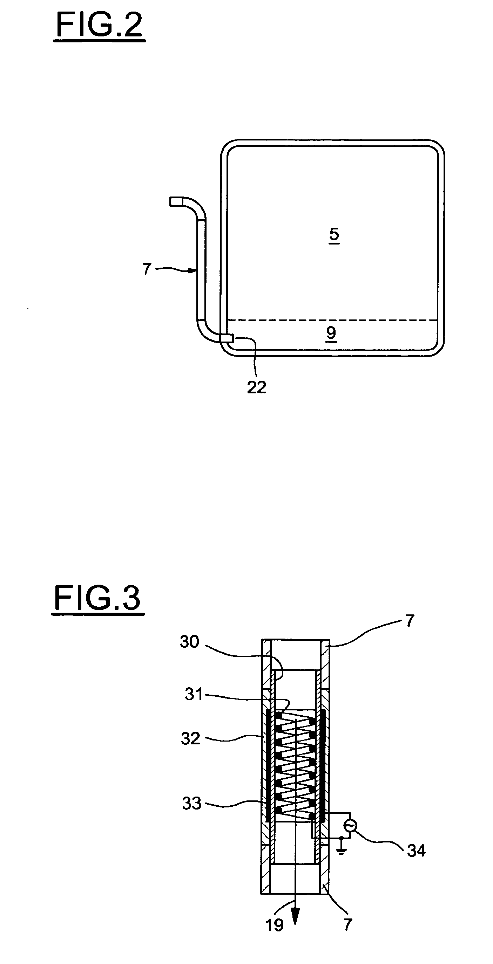

Dans une variante illustrée en figure 2, la canalisation auxiliaire 7 ne traverse pas le conduit principal 2 et présente une extrémité intérieure 22 débouchant à l'intérieur du conduit principal 2 directement dans la zone basse 9 de l'évaporateur 5.

On va maintenant décrire, à l'aide de la figure 3, le dispositif de stérilisation 17. Celui-ci comprend un tube interne diélectrique 30 à l'intérieur duquel est disposé une électrode interne 31 sous la forme d'un ressort métallique. Un tube diélectrique protecteur 32 entoure le tube interne diélectrique 30 et comprend dans sa face intérieure une électrode tubulaire externe 33. Une source de haute tension alternative 34 est reliée aux électrodes interne 31 et externe 33. La batterie 35 du véhicule fournit de l'énergie à la source de haute tension alternative 34.

Le tube interne diélectrique 30 est de préférence en céramique, telle que de l'alumine de 1 mm d'épaisseur. L'électrode interne 31 peut également être constituée d'une grille métallique fine pliée.

L'électrode tubulaire externe 33 s'étend sur une longueur le long de l'axe légèrement supérieure à celle de l'électrode interne 31, de manière à éviter le renforcement du champ électrique aux extrémités des électrodes. De même, le tube diélectrique protecteur 32 couvre toute la surface de l'électrode externe 33. Le tube interne diélectrique 30 s'étend sur une longueur supérieure au tube diélectrique protecteur 32 et pénètre à l'intérieur de la canalisation auxiliaire 7 de chaque côté du tube interne diélectrique 30.

La source de haute tension alternative 34 peut être de quelques kilovolts d'amplitude et d'une fréquence allant de 100 Hz à 10 kHz.

De manière alternative, le dispositif de stérilisation 17 peut être composé d'une ou plusieurs plaques diélectriques disposées sur un bord interne de la canalisation auxiliaire 7. Des électrodes métalliques fines peuvent être sérigraphiées sur la surface de la plaque diélectrique en contact avec le flux d'air de la canalisation auxiliaire 7.

La zone réfrigérée 11 peut être par exemple la boîte à gants du véhicule.

Dans une variante, le système peut ne pas être équipé du pulseur auxiliaire 16. Dans ce cas, l'ozone généré par le dispositif de stérilisation 17 s'écoule par gravité jusque dans la zone basse de l'évaporateur 5.

## Revendications

1. Système de traitement d'air pour véhicule automobile, comprenant un conduit principal d'air (2) relié à l'habitacle (3) du véhicule, un dispositif de refroidissement d'air muni d'un échangeur thermique logé dans le conduit principal (2), un dispositif de propulsion d'air (1) apte à propulser de l'air le long de l'échangeur thermique et du conduit principal (2) vers l'habitacle (3), le système comprenant en outre un dispositif de stérilisation (17) apte à générer un gaz stérilisant (19) amené par une canalisation auxiliaire (7) débouchant à l'intérieur du conduit principal (2), le dispositif de stérilisation (17) étant implanté dans une portion extérieure (13) de la canalisation auxiliaire (7) située à l'extérieur du conduit principal (2) **caractérisé par le fait que** la canalisation auxiliaire (7) présente une extrémité extérieure (10) et une extrémité intérieure (8) présentant une ouverture débouchant au voisinage de l'échangeur thermique, un dispositif de volet principal (6) étant situé dans le conduit principal (2) en aval de l'échangeur thermique et de l'extrémité intérieure (8) de la canalisation auxiliaire (7) et **par le fait qu'**une unité de commande (18) est reliée au dispositif de propulsion d'air (1), au dispositif de stérilisation (17) et au volet principal (16) de façon à actionner le dispositif de stérilisation (17) lorsque le volet principal (16) est fermé et que le dispositif de propulsion d'air (1) n'est pas actionné.

2. Système selon la revendication 1, dans lequel l'échangeur thermique est du type évaporateur (5) de fluide de réfrigération.

3. Système selon la revendication 1 ou 2, dans lequel le dispositif de stérilisation comprend une première (31) et une deuxième (33) électrodes, séparées par un matériau diélectrique (30) et alimentées par une source électrique haute tension (34).

4. Système selon l'une des revendications précédentes, dans lequel le dispositif de stérilisation (17) comprend une électrode à plasma à effet couronne.

5. Système selon l'une des revendications précédentes, dans lequel le dispositif de stérilisation est un générateur d'ozone.

6. Système selon l'une des revendications précédentes, dans lequel l'extrémité intérieure (8) de la canalisation auxiliaire (7) est située dans une zone basse (9) de l'échangeur thermique, relativement la plus basse du voisinage de l'échangeur lorsque le système est implanté dans le véhicule.

7. Système selon l'une des revendications précédentes, dans lequel le dispositif de stérilisation (17) est situé en un point de la canalisation auxiliaire (7) destiné à être situé au dessus du conduit principal (2) lorsque le système est implanté dans le véhicule.

8. Système selon l'une des revendications précédentes, dans lequel la canalisation auxiliaire (7) présente un volet d'isolement auxiliaire (15) situé au-delà du dispositif de stérilisation (17) par rapport à l'extrémité intérieure (8).

9. Système selon la revendication 8, comprenant un pulseur auxiliaire (16) apte à déplacer de l'air depuis le dispositif de stérilisation (17) jusqu'à l'extrémité intérieure (8) de la canalisation auxiliaire (7).

10. Système selon l'une des revendications 8 et 9, dans lequel l'unité de commande (18) est reliée au volet d'isolement auxiliaire (15) de façon à actionner le dispositif de stérilisation (17) lorsque le volet d'isolement auxiliaire (15) est fermé.

11. Véhicule comprenant un système de traitement d'air selon l'une des revendications précédentes, et comprenant une zone (11) réfrigérée parallèlement à l'habitacle, la canalisation auxiliaire (7) étant reliée à ladite zone réfrigérée (11) par son extrémité extérieure (10), opposée à son extrémité intérieure (8).

## Claims

1. Air treatment system for a motor vehicle, comprising a main air duct (2) connected to the cabin (3) of the vehicle, an air-cooling device provided with a heat exchanger housed in the main duct (2), an air-propelling device (1) capable of propelling air along the heat exchanger and the main duct (2) towards the cabin (3), the system further comprising a sterilizing device (17) able to generate a sterilizing gas (19) carried by an auxiliary line (7) opening into the main duct (2), the sterilizing device (17) being installed in an exterior portion (13) of the auxiliary line (7) situated outside the main duct (2), **characterized in that** the auxiliary line (7) has an outer end (10) and an inner end (8) having an opening that opens out near the heat exchanger, a main shutter device (6) being located in the main duct (2) downstream of the heat exchanger and of the inner end (8) of the auxiliary line (7) and **in that** a control unit (18) is connected to the air-propelling device (1), to the sterilizing device (17) and to the main shutter (16) so as to operate the sterilizing device (17) when the main shutter (16) is closed and the air-propelling device (1) is not being actuated.

2. System according to Claim 1, in which the heat exchanger is of the refrigerant evaporator (5) type.

3. System according to Claim 1 or 2, in which the sterilizing device comprises a first electrode (31) and a second electrode (33), which electrodes are separated via a dielectric material (30) and powered by a high-voltage electric source (34).

4. System according to one of the preceding claims, in which the sterilizing device (17) comprises a corona-effect plasma electrode.

5. System according to one of the preceding claims, in which the sterilizing device is an ozone generator.

6. System according to one of the preceding claims, in which the inner end (8) of the auxiliary line (7) is situated in a bottom region (9) of the heat exchanger, which in relative terms is the bottom most vicinity of the exchanger when the system is installed in the vehicle.

7. System according to one of the preceding claims, in which the sterilizing device (17) is situated at a point on the auxiliary line (7) that is intended to be situated above the main duct (2) when the system is installed in the vehicle.

8. System according to one of the preceding claims, in which the auxiliary line (7) has an auxiliary shut-off shutter (15) situated beyond the sterilizing device (17) in relation to the inner end (8).

9. System according to Claim 8, comprising an auxiliary blower (16) able to move air from the sterilizing device (17) as far as the inner end (8) of the auxiliary line (7).

10. System according to either of Claims 8 and 9, in which the control unit (18) is connected to the auxiliary shut-off shutter (15) in such a way as to operate the sterilizing device (17) when the auxiliary shut-off shutter (15) is closed.

11. Vehicle comprising an air treatment system according to one of the preceding claims and comprising a region (11) that is refrigerated in parallel with the cabin, the auxiliary line (7) being connected to said refrigerated region (11) by its outer end (10) which is the opposite end to its inner end (8).

## Patentansprüche

1. Luftbehandlungssystem für Kraftfahrzeug, das eine Hauptleitung (2) aufweist, die mit der Fahrgastzelle (3) des Fahrzeugs verbunden ist, eine Luftkühlvorrichtung, die mit einem Wärmeaustauscher, der in der Hauptleitung (2) untergebracht ist, versehen ist, eine Luftblasvorrichtung (1), die die Luft entlang dem Wärmeaustauscher und der Hauptleitung (2) zu der Fahrgastzelle (3) befördern kann, wobei das System ferner eine Sterilisationsvorrichtung (17) aufweist, die ein sterilisierendes Gas (19), das von einer Hilfskanalisation (7), die in das Innere der Hauptleitung (2) mündet, zugeführt wird, erzeugen kann, wobei die Sterilisationsvorrichtung (17) in einem äußeren Abschnitt (13) der Hilfskanalisation (7), die sich außerhalb der Hauptleitung (2) befindet, angeordnet ist, **dadurch gekennzeichnet, dass** die Hilfskanalisation (7) ein äußeres Ende (10) und ein inneres Ende (8) aufweist, die eine Öffnung aufweisen, die in der Nähe des Wärmeaustauschers mündet, wobei sich eine Hauptklappenvorrichtung (6) in der Hauptleitung (2) stromabwärts des Wärmeaustauschers und des inneren Endes (8) der Hilfskanalisation (7) befindet, und dadurch, dass eine Steuereinheit (18) mit der Luftblasvorrichtung (1), der Sterilisationsvorrichtung (17) und der Hauptklappe (16) derart verbunden ist, dass die Sterilisationsvorrichtung (17) betätigt wird, wenn die Hauptklappe (16) geschlossen wird, und dass die Luftantriebsvorrichtung (1) nicht betätigt wird.

2. System nach Anspruch 1, bei dem der Wärmeaustauscher des Typs Verdampfer (5) von Kühlmittel ist.

3. System nach Anspruch 1 oder 2, bei dem die Sterilisationsvorrichtung eine erste (31) und eine zweite (33) Elektrode aufweist, die durch einen dielektrischen Werkstoff (30) getrennt sind und durch eine Hochspannungsstromquelle (34) versorgt werden.

4. System nach einem der vorhergehenden Ansprüche, bei dem die Sterilisationsvorrichtung (17) eine Plasmaelektrode mit Coronaeffekt aufweist.

5. System nach einem der vorhergehenden Ansprüche, bei dem die Sterilisationsvorrichtung ein Ozongenerator ist.

6. System nach einem der vorhergehenden Ansprüche, bei dem das innere Ende (8) der Hilfskanalisation (7) in einer unteren Zone (9) des Wärmeaustauschers liegt, die relativ tiefer ist als die Umgebung des Austauschers, wenn das System in dem Fahrzeug eingerichtet ist.

7. System nach einem der vorhergehenden Ansprüche, bei dem die Sterilisationsvorrichtung (17) an einer Stelle der Hilfskanalisation (7) liegt, die dazu bestimmt ist, sich oberhalb der Hauptleitung (2) zu befinden, wenn das System in dem Fahrzeug eingerichtet ist.

8. System nach einem der vorhergehenden Ansprüche, bei dem die Hilfskanalisation (7) eine Hilfsabsperrklappe (15) aufweist, die im Vergleich zu dem inneren Ende (8) über die Sterilisationsvorrichtung (17) hinaus liegt.

9. System nach Anspruch 8, das ein Hilfsgebläse (16) aufweist, das Luft von der Sterilisationsvorrichtung (17) bis zu dem inneren Ende (8) der Hilfskanalisation (7) bewegen kann.

10. System nach einem der Ansprüche 8 und 9, bei dem die Steuereinheit (18) mit der Hilfsabsperrklappe (15) derart verbunden ist, dass die Sterilisationsvorrichtung (17) betätigt wird, wenn die Hilfsabsperrklappe (15) geschlossen ist.

11. Fahrzeug, das ein Luftbehandlungssystem nach einem der vorhergehenden Ansprüche aufweist und einen gekühlten Bereich (11) parallel zu der Fahrgastzelle, wobei die Hilfskanalisation (7) mit dem Kühlbereich (11) durch ihr äußeres Ende (10), das ihrem inneren Ende (8) entgegengesetzt ist, verbunden ist.
